Europäisches Patentamt

European Patent Office

Office européen des brevets

(19)

(11) Veröffentlichungsnummer: **0 180 842**
**B1**

(12) **EUROPÄISCHE PATENTSCHRIFT**

(45) Veröffentlichungstag der Patentschrift: 02.05.90

(21) Anmeldenummer: 85113338.9

(22) Anmeldetag: 21.10.85

(51) Int. Cl.⁵: **C 09 K 3/30**, C 09 G 1/16, D 06 M 15/256

(54) Imprägnierspray mit Pflegewirkung für Leder und Textilien sowie dessen Verwendung.

(30) Priorität: 22.10.84 DE 3438645

(43) Veröffentlichungstag der Anmeldung:
14.05.86 Patentblatt 86/20

(45) Bekanntmachung des Hinweises auf die
Patenterteilung:
02.05.90 Patentblatt 90/18

(84) Benannte Vertragsstaaten:
AT BE CH DE FR GB IT LI LU NL SE

(56) Entgegenhaltungen:
EP-A-0 032 779
FR-A-2 161 068
US-A-3 459 696

(73) Patentinhaber: Werner & Mertz GmbH
Ingelheimstrasse 1-3
D-6500 Mainz 1 (DE)

(72) Erfinder: Peter, Hans-Joachim, Dr.
Goldregenstrasse 36
D-6500 Mainz 21 (DE)

(74) Vertreter: Zumstein, Fritz, Dr. et al
Dr. F. Zumstein sen Dr. E. Assman Dipl.-Ing. F.
Klingseisen Dr. F. Zumstein jun.
Bräuhausstrasse 4
D-8000 München 2 (DE)

Courier Press, Leamington Spa, England.

# EP 0 180 842 B1

## Beschreibung

### Technischer Hintergrund

Die EP—A—169 935 betrifft ein Imprägnierspray für Leder und Textilien, das vor allem für die Behandlung wasserempfindlicher Materialien vorgesehen ist. Die vorliegende Anmeldung, beruhend auf einer präzisierten Basisrezeptur der EP—A—169 935, betrifft nun eine weitere Ausgestaltung mit dem Ziel, dieser Rezeptur zusätzlich auch noch eine Pflegewirkung zu verleihen.

Die Anwendung von Imprägniermitteln ist für eine komplette Pflege von Leder bisweilen nicht ausreichend. Um das gute Aussehen der Ledergegenstände zu bewahren, ist es oft notwendig, sie weich und geschmeidig zu erhalten und vor Rissigwerden und vorzeitiger Alterung zu schützen; auch ist es nötig, äußerliche Abriebstellen und Verletzungen, die bei der täglichen Beanspruchung auftreten können, zu reparieren. Glänzende Leder benötigen außerdem glanzgebende Pflegesubstanzen. In einigen Fällen müssen den Ledern außer imprägnierenden und pflegenden Bestandteilen auch Farbstoffe zugeführt werden, die ebenfalls in die erweiterten Rezepturen eingearbeitet werden können.

Als Pflegekomponenten kommen dabei ülicherweise in Betracht:
1. Wachse (z.B. Naturwachse, modifizierte Montanwachse, PE-Wachse, Paraffine)
2. Silikone (z.B. Dimethylpolysiloxane, aminofunktionelle Polysiloxane (u.ä.)
3. Öle und Fette (Trane, Wollfett, Nerzöl, Lanolin)
4. Farbstoffe (gelöste Farbstoffe, organische und anorganische Pigmentfeinteige, anorganische und organische Farbpigmente)

### Stand der Technik:

Ledersprays, welche die geforderten pflegewirksamen Eigenschaften befriedigend erfüllen, sind auf dem Markt. Sie sind auf Basis organischer Lösungsmittel (chlorierte Kohlenwasserstoffe, Kohlenwasserstoffe, Ester u.ä.) aufgebaut. Sie erfüllen ihre anwendungstechnischen Aufgaben befriedigend, haben aber die ungünstigen physiologischen Eigenschaften, wie sie bereits in der EP—A—169 935, Seite 3, Zeile 7 bis 23 geschildert wurden.

Dem unbeschränkten Einsatz obengenannter Aerosolprodukte stellt sich nämlich ihre in den letzten Jahren aufgetretene unerwünschte physiologische Wirkung entgegen. In mehreren Veröffentlichungen wurden diese Imprägniersprays auf der Basis bekannter Wirkstoff/Treibmittel-Kombinationen für das Auftreten von Vergiftungen im Bereich des Atemtraktes verantwortlich gemacht. Es wurde über hochgradigen Hustenreiz, Atemnot und Lungenödeme berichtet. Diese toxischen Erscheinungen traten hauptsächlich bei der Verwendung von Imprägniersprays in geschlossenen, meist unbelüfteten kleinen Räumen auf. Aus diesem Grund werden deshalb auf allen in der Bundesrepublik Deutschland erhältlichen Imprägniersprays in Abstimmung der Behörden mit der Imprägnierspray herstellenden Industrie Warnhinweise auf die Etiketten gedruckt. Auch wurden Imprägniersprays von einzelnen Herstellern in Übereinknuft mit den zuständigen Behörden vom Markt zurückgenommen.

Als Beispiel für bekannte Imprägnierkompositionen, welche chlorierte Kohlenwasserstoffe als Lösemittel enthalten, ist die US—PS 3 459 696 zu nennen. In der EP—A—32 779 sind Ethylenoxid/Propylenoxid-Copolymere enthaltende Aerosole auf wäßriger Basis beschrieben, welche gegebenenfalls Silikone, Wachse sowie Lösungsmittel, wie z.B. Aceton, aliphatische niedrige Alkohole und Glykole, enthalten können und welche vor allem für Parfüm- oder Insektizid-Formulierungen vorgesehen sind. Auch die aus der FR—PS 2 161 068 bekannte Wachs- und Silikon-haltige Komposition für die Oberflächenbehandlung, insbesondere von Möbeln, auf wäßrig-öliger Basis, weist kleine Fluorcarbonharzkomponente auf. Keine dieser Literaturstellen beschreibt die bei Aerosolen mit Fluorcarbonharz - Wirkstoffen verbundenen und etwa zu lösenden Probleme.

Es stellte sich nun die Aufgabe, auch imprägnierende *und* pflegende Sprays so bereitzustellen, daß sie keine Gefährdung des Verbrauchers bei mißbräuchlicher Anwendung hervorrufen können.

Bei den herkömmlichen Pflegesprays auf Basis der genannten organischen Lösungsmittel ist bei inhalationstoxikologischen Untersuchungen festzustellen, daß die LC 50-Werte umso ungünstiger werden, je mehr unterschiedliche Imprägnier- und Pflegesubstanzen in der Rezeptur enthalten sind. Anders ausgedrückt, bei bekannten Sprays, die sowohl Fluorchemikalien als auch Wachse, Silikone, Nerzöl etc. enthalten, werden die physiologischen Eigenschaften besser, wenn man den Gehalt der verschiedenen pflegenden Ingrendenzien in der Rezeptur verringert.

Gemäß der EP—A—169 935 wurde überraschenderweise nun gefunden, daß an sich bekannte Hydrophobierstoffe auf Basis perfluorierter Carbonharze (Fluorcarbonharze), die mit Wasser allein oder mit Wasser/Alkohol-Mischungen verdünnbar sind, als Aerosol mit Treibmitteln, wie z.B. Dimethylether (DME), abgefüllt und versprüht werden können. Sie sind zur hydrophobierenden Ausrüstung wasserempfindlicher Leder geeignet, ohne daß beim Einatmen der Sprühnebel physiologische Schädigungen der Atemwege entstehen. Gesundheitsbeeinträchtigungen sind mit der Zusammensetzung nicht zu befürchten, wie inhalationstoxikologische Untersuchungen erbracht haben.

### Erfindungsgegenstand

Bei dem Prinzip der EP—A—169 935, d.h. bei dem Lösungsmittel insbesondere auf alkoholischer Basis, wurde nun ganz überraschend festgestellt, daß die guten physiologischen Eigenschaften dieser

2

Basisrezepturen nicht verschlechtert werden, je mehr von den o.a. Imprägnier- bzw. Pflegesubstanzen—Wachse, Silikone, Öle/Fette und/oder Farbstoffe—in dispergierter bzw. emulgierter Form enthalten sind.

Gegenstand der vorliegenden Erfindung ist deshalb ein Imprägnierspray (mit Pflegewirkung) für Leder und Textilien auf der Basis

(A) eines Wirkstoffs, der aus Fluorcarbonharzen, einem (mit Wasser mischbaren) Lösemittel, welches aus Ethanol, n-Propanol und Isopropanol ausgewählt ist, sowie gegebenenfalls Hilfsstoffen besteht und

(B) eines oder mehrerer mit Wasser misch- oder emulgierbarer Treibmittel,

das dadurch gekennzeichnet ist, daß der Wirkstoff (A) als obligatorische Komponente noch übliche Lederpflegezusätze enthält, welche aus Wachsen, Silikonen, Öle/Fette und/oder Farbstoffen ausgewählt sind und die gegebenenfalls in dem genannten Alkohol dispergiert bzw. emulgiert sind.

Gegenstand der Erfindung ist ferner die Verwendung des anspruchsgemäßen Imprägniersprays zur Behandlung von Leder und Textilien.

Als anmeldungsgemäß zu verwendende Lederpflegezusätze sind die oben unter Ziffer 1 bis 4 wiedergegebenen Pflegekomponenten zu nennen. Sie können entweder allein oder in Kombination miteinander eingesetzt werden.

Wenn einige der oben genannten Pflegesubstanzen alkoholunlöslich sind, kann man sie für die Einarbeitung in die Basisrezeptur in an sich bekannter Weise in dem genannten Alkohol dispergieren bzw. emulgieren.

Dabei können die Wachsdispersionen im Prinzip aus üblichen Naturwachsen, modifizierten Montanwachsen, oxidierten Polyethylenwachsen oder Paraffinen in an sich bekannter Weise mit Emulgatoren (nichtionisch, anionisch, kationische) hergestellt werden. Die Wachsauswahl erfolgt in üblicher Weise nach den anwendungstechnischen Erfordernissen, wie Glanzgabe, Härte und Flexibilität des Wachsfilmes in Verbindung auch mit den anderen Ingrendenzien. Über Wachse und ihre Dispersionen, deren Herstellung und Eigenschaften geben viele Firmenschriften der Wachshersteller umfassend Auskunft.

Als weitere Pflegesubstanzen werden den Imprägnier- und Pflegesprays in vielen Fällen Silikonöle zugesetzt, um die Wasserabweisung zu verbessern, die Polierbarkeit zu erleichtern, die Flexibilität des Pflegefilms zu optimieren und der Lederoberfläche einen tieferen Glanz zu verleihen. Gebräuchlich und üblich sind Polymethylsiloxane niederer, mittlerer und höherer Viskostät (z.B. Baysilon® M 100, M 500, M 10 000) sowie Polymethylsiloxanderivate mit z.B. aminofunktionellen Gruppen (z.B. Baysilone® OF 4061; Silikonöl SLM 50349).

Weitere Pflegezusätze können gereinigte und stabilisierte Wollfettderivate (Lanoline) sein, die die Oberfläche der behandelten Leder verbessern und zur Abstimmung der Eigenschaften in Pflegemitteln eingesetzt werden. Auch wird in letzter Zeit in Pflegemitteln oft raffiniertes Nerzöl verwendet.

Für die komplete Pflege von Ledergegenständen ist ab und zu eine Farbauffrischung erforderlich. Diese kann man erreichen, indem man die Aerosolwirkstoffe mit wasserlöslichen bzw. wasserdispergierenden Farbstoffen bzw. Farbpigmenten versetzt. Dabei ist zu berücksichtigen, daß die Farbstoffe zusammen mit den Pflege- und Imprägniermitteln eine genüngende Trocken- und Naßreibechtheit aufweisen. Diese Voraussetzung wird erfüllt durch feindispergierte organische und/oder anorganische Pigmentpräparationen, wie z.B. Melustralfarben, Helio-Echtfarben oder Corial-Echtfarben. Die meisten dieser Farbpigmente sind auch als Feinteigpräparationen im Handel. Zum Einfärben der obengenannten Imprägnier-/Pflegewirkstoffe können auch Metallkomplexfarbstoffe Verwendung finden, z.B. Irgadermfarben, Levaderm-Farben, Bayderm-Farben. Alkoholische Wirkstoffe können mit Sudanfarben gefärbt werden.

Durch entsprechende Abmischung der Grundfarben können alle vorkommenden Farbnuancen eingestellt werden.

Bezüglich der Art und Menge der übrigen Komponenten des Wirkstoffes (A), wie Fluorcarbonharze, Lösemittel sowie gegebenenfalls Hilfsstoffe, gelten die entsprechenden detaillierten Ausführungen in der EP—A—169 935 (vgl. dort insbesondere Seite 4 bis 7 sowie die Patentansprüche), und zwar unter Berücksichtigung der präzisierten Basisreceptur. Ebenso ist bezüglich Art und Menge des Treibmittels (B) auf die entsprechenden Ausführungen in der EP—A—169 935 zu verweisen.

Bei einem mit Wasser mischbaren Treibmittel (B) handelt es sich bevorzugt um ein verflüssigtes Treibmittel, wie z.B. Dimethylether (DME). Bei Vorliegen dieses Treibmittels (DME) in Kombination mit dem anspruchsgemäßen Lösemittel, insbesondere Ethanol oder Isopropanol, bildet sich in dem Imprägnierspray ein binäres System aus.

Als Treibmittel (B) kann auch ein verflüssigtes (mit Wasser nicht mischbares aber) emulgierbares Treibmittel, wie z.B. Propan, Butan oder Difluordichlormethan, vorliegen.

Als Treibmittel (B) können aber auch komprimierte, mit Wasser mischbare Treibmittel vorhanden sein, wie z.B. Kohlendioxid; als weitere Beispiele komprimierter Treibmittel sind Stickstoff und Distickoxid zu nennen.

Die in dem Wirkstoff (A) vorhandenen Fluorcarbonharze sind die üblichen, wie sie von mehreren Firmen zur hydrophobierenden Ausrüstung von Leder und Textilien angeboten werden. Insbesondere sind solche hydrophobierenden Fluorcarbonharze zu nennen, die mit Alkoholen verdünnbar sind, insbesondere solche, die mit Alkoholen Lösungen oder über längere Zeit stabile Emulsionen bzw. Dispersionen bilden. Dabei versteht man auf diesem Gebiet unter "längere Zeit stabil" im allgemeinen übliche Standzeiten dieser Produkte, von z.B. bis zu 3 Jahren.

Im Zusammenhang mit solchen bekannten hydrophobierenden Perfluorverbindungen sind zu nennen langekettige Perfluorcarbonsäuren, Perfluoralkansulfonsäuren, Perfluoralkansulfonsäurefluoride bzw. davon abgeleitete Polymerisate auf der Basis fluorhaltiger (Meth) - acrylsäureester, ferner Produkte auf Basis fluoraliphatischer Verbindungen mit salzbildenden Aminogruppen (vgl. z.B. DE—AS 11 96 183, DE—AS 10 72 612 sowie EP—A—102 690). Als Vertreter von im Handel befindlichen Produkten (meistens als Dispersionen) sind zu nennen, wobei in Klammern jeweils der Feststoffgehalt in Gewichtsprozent angegeben ist: FC 208 (ca. 30%); FC 214 (20%); FC 228 (27%); FC 229 (20%); FC 390 (10%); FC 453 (20%); FC 461 (30%); sämtlich unter der Bezeichung Scotchgard® geschützt; Foraperle C 305 (25%); Foraperle P 300 (17%); Foraperle T 140 (30%); Foraperle T 145 (25%); Foraperle T 355 (30%); Foraperle T 344 (31%); Foraperle 1190 (28%); Foraperle T 430, sämtlich unter der Bezeichnung Foraperle® geschützt; Xeroderm® DH 471763 (100%); Nuva® F (ca. 20%); Nuva® FH (ca. 25%). Besonders bevorzugt unter diesen Produkten sind FC 228 sowie Foraperle® P 300 und C 305.

Das Lösemittel [im Wirkstoff (A)] ist Ethanol, n-Propanol oder Isopropanol.

Bevorzugt ist es, wie bei dem Gegenstand der EP—A—169 935, wenn die resultierende verdünnte Lösung von Fluorcarbonharz im Lösemittel, d.h. der Wirkstoff (A), mit dem Treibmittel (B), z.B. Dimethylether, klar oder fein dispers in druckfesten Behältern mischbar ist. Aber auch das Lösemittel in Kombination mit den Treibmitteln Propan oder Butan hat sich bewährt.

In dem Wirkstoff (A) können außer dem Fluorcarbonharz, dem Lösemittel und den anspruchsgemäßen Lederpflegezusätzen gegebenenfalls noch die bei derartigen Sprays üblichen Hilfsstoffe vorhanden sein. Einer dieser fakultativen Hilfsstoffe sind übliche Korrosionsschutzmittel (Korrosionsinhibitoren) für Weißblech- und Aluminiumdosen. Nur beispielsweise sind zu nennen; Natriumbenzoat; Dinatriumhydrogenphosphat; Vircopet 20, 30 und 40; Deriphat 151 C, Rewo B 3010; Sarcosyl® NL 97; Dehyquart® SP.

Bezüglich der im Wirkstoff (A) gegebenenfalls vorhandenen Hilfsstoffe sind außerdem noch Riechstoffe der auf diesem Gebiet üblichen Art zu nennen, wie wasser-, lösemittel- und treibmittel-, insbesondere DME-beständige Parfümöle.

Als weitere gegebenenfalls vorhandene Hilfsstoffe sind noch übliche Antischaummittel zu erwähnen.

Durch die zusätzliche Anwesenheit der anspruchsgemäßen Lederpflegezusätze Wachse, Silikone, Fette/Öle (Lanolin/Nerzöl), Emulgatoren und Farbstoffe erweitert sich die Wirkstoffzusammensetzung der Basisrezeptur. Die Mengen der anmeldungsgemäß zusätzlichen Komponenten können ebenfalls in weiten Bereichen variieren. Vorteilhaft besitzt der Wirkstoff (A)—Wirkstoffrezeptur—folgende Zusammensetzung, wobei die Menge der Komponenten jeweils in Gewichtsprozent, bezogen auf die Wirkstoffrezeptur, angegeben ist:

| | |
|---|---|
| Fluorcarbonharze (Feststoff) | 0,1 bis 1,5 bevorzugt 0,2 bis 1 |
| Lösemittel (LW) | 6 bis 98 bevorzugt 12 bis 98 |
| Wachse | bis 5 bevorzugt 0,5 bis 3 |
| Silikone | bis 5 bevorzugt 0,2 bis 4 |
| Öle/Fette (Lanolin/Nerzöl) | bis 5 bevorzugt bis 4 |
| Emulgatoren | bis 1 bevorzugt 0,1 bis 0,8 |
| ggfs. Korrosionsinhibitor | bis 0,5 bevorzugt 0,1 bis 0,4 |
| ggfs. Parfüm | bis 0,5 bevorzugt bis 0,3 |
| ggfs. Farbstoffe | bis 5 bevorzugt bis 3 |

Die Menge des Wirkstoffs (A) im erfindungsgemäßen Imprägnierspray kann je nach seiner Art und der Art des vorhandenen Treibmittels variieren. Im allgemeinen liegen bis 65 Gewichtsprozent an Wirkstoff (A) (bezogen auf die fertige Abfüllrezeptur) vor. Besonders bewährt hat sich eine Wirkstoffmenge von 40 bis 60 Gewichtsprozent. Die Menge des Treibmittels (B) kann ebenfalls variieren. Sie liegt gewöhnlich bei 30 bis 70 Gewichtsprozent, bevorzugt 35 bis 55 Gewichtsprozent, verflüssigtem Treibmittel und bei bis 7 Gewichtsprozent, bevorzugt 0 bis 5 Gewichtsprozent, komprimiertem Treibmittel.

Die Anwendung des erweiterten, erfindungsgemäßen pflegenden Imprägniersprays erfolgt bevorzugt bei Lederartikeln wie Schuhe, Lederbekleidung, Ledermöbel usw. Die wachshaltigen Rezepturen sind dabei bevorzugt für Leder mit glatter Oberfläche gedacht; dabei ist es unerheblich, ob sogenannte Anilin-, Semi-Anilin- oder gedeckte Ledertypen vorliegen. Jedoch lassen sich mit den erweiterten Rezepturen auch Textilien vorteilhaft behandeln.

Bei den inhalationstoxikologischen Untersuchungen analog OECD Methode 403 brachten selbst die sehr hohen Spray-Konzentrationen von 50 g/m$^3$ bei einer 4-stündigen Exposition keinerlei Mortalitäten bei den Versuchstieren (Ratten). LC 50-Werte konnten auch bei diesen Rezeptvarianten nicht ermittelt werden.

Als Beispiel für pflegende Imprägniersprays sei folgende Zusammensetzung genannt (Zahlenangaben jeweils in Gewichtsprozent, bezogen auf Wirkstoffrezeptur bzw. Einfärberezeptur bzw. Abfüllrezeptur):

# EP 0 180 842 B1

### Beispiel
#### 1. Wirkstoffrezeptur
[Wirkstoff (A)]

| | |
|---|---|
| Foraperle P 300 | 1,5 |
| Ethanol, vergällt | 96,5 |
| Baysilon M 500 | 0,5 |
| Baysilon M 10 000 | 1,0 |
| B 3010 | 0,3 |
| Parfüm | 0,2 |

#### 2. Einfärberezeptur
(Schwarz)

| | |
|---|---|
| Wirkstoff | 99,75% |
| Sudan®-Schwarz X 60 | 0,25% |

#### 3. Abfüllrezeptur

| | |
|---|---|
| Wirkstoff | 60,0 |
| Propan/Butan 2,7 bar | 40,0 |

## Patentansprüche

1. Imprägnierspray für Leder und Textilien auf der Basis
(A) eines Wirkstoffs, der aus Fluorcarbonharzen, einem (mit Wasser mischbaren) Lösemittel, welches aus Ethanol, n-Propanol und Isopropanol ausgewählt ist, sowie gegebenenfalls Hilfsstoffen besteht und
(B) eines oder mehrerer mit Wasser misch- oder emulgierbarer Treibmittel,
dadurch gekennzeichnet, daß der Wirkstoff (A) als obligatorische Komponente noch übliche Lederpflegezusätze enthält, welche aus Wachsen, Silikonen, Öle/Fette und/oder Farbstoffen ausgewählt sind und die gegebenenfalls in dem genannten Alkohol dispergiert bzw. emulgiert sind.

2. Imprägnierspray nach Anspruch 1, dadurch gekennzeichnet, daß der Wirkstoff (A) besteht aus (jeweils Gewichtsprozent, bezogen auf Wirkstoffrezeptur):

| | |
|---|---|
| Fluorcarbonharze (Feststoff) | 0,1 bis 1,5% |
| Lösemittel | 6 bis 98% |
| Wachse | bis 5% |
| Silikone | bis 5% |
| Öle/Fette | bis 5% |
| Emulgatoren | bis 1% |
| ggfs. Korrosionsinhibitor | bis 0,5% |
| ggfs. Parfüm | bis 0,5% |
| ggfs. Farbstoffe | bis 5 |

und daß das gebrauchsfertige Spray (Abfüllrezeptur) enthält (jeweils Gewichtsprozent, bezogen auf Abfüllrezeptur):
bis 65% Wirkstoff (A)
30 bis 70% verflüssigtes Treibmittel und
bis 7% komprimiertes Treibmittel.

3. Verwendung eines in den vorstehenden Ansprüchen gekennzeichneten Sprays zur Behandlung von Leder und Textilien.

## Revendications

1. Spray imprégnant pour cuir et textiles à base
(A) d'une matière active qui est constituée par des résines fluorocarbonées, un solvant (miscible à l'eau) choisi parmi l'éthanol, le n-propanol et l'isopropanol, ainsi qu'éventuellement par des additifs et
(B) d'un ou plusieurs agents propulseurs miscibles ou émulsionnables avec l'eau,
caractérisé en ce que la matière active (A) contient en outre, en tant que composants obligatoires, les additifs usuels pour l'entretien du cuir qui sont sélectionnés parmi les cires, les silicones, les huiles/graisses et/ou les colorants et sont éventuellement dispersés ou émulsionnés dans l'alcool cité.

2. Spray imprégnant selon la revendication 1, caractérisé en ce que la matière active (A) consiste (en pourcent en poids chaque fois par rapport à la formulation de matière active) en

5

| résines fluorocarbonées (matières solides) | 0,1 à 1,5% |
| solvant | 6 à 98% |
| cires | jusqu'à 5% |
| silicones | jusqu'à 5% |
| huiles/graisses | jusqu'à 5% |
| émulsifiants | jusqu'à 1% |
| éventuellement un inhibiteur de corrosion | jusqu'à 0,5% |
| éventuellement un parfum | jusqu'à 0,5% |
| éventuellement des colorants | jusqu'à 5% |

et que le spray imprégnant prêt à l'emploi (formulation de remplissage) contient (en pourcent en poids chaque fois par rapport à la formulation de remplissage):

jusqu'à 65% de matière active (A)

30 à 70% d'agent propulseur liquéfié et

jusqu'à 7% d'agent propulseur comprimé.

3. Utilisation d'un spray imprégnant caractérisé dans les revendications précédentes pour le traitement du cuir et des textiles.

## Claims

1. Impregnating spray for leather and textiles based on:

(A) an active substance consisting of fluorocarbon resins, a water miscible solvent selected from ethanol, n-propanol and isopropanol together with optional adjuvants and

(B) one or more propellants which are miscible or emulsifiable with water, characterised in that the active substance (A) additionally contains as obligatory components conventional leathercare additives selected from waxes, silicones, oils/fats and/or dyes which are if necessary dispersed or emulsified in the designated alcohol.

2. An impregnating spray according to claim 1 characterised in that the active substance (A) consists of (in percent by weight in each instance based on the active substance composition):

| fluorocarbon resin (solid) | 0.1 to 1.5% |
| solvent | 6 to 98% |
| wax | up to 5% |
| silicone | up to 5% |
| oil/fat | up to 5% |
| emulsifier | up to 1% |
| optional corrosion inhibitor | up to 0.5% |
| optional perfume | up to 0.5% |
| optional dye | up to 5 |

and that the spray when ready for use (as its composition of contents) contains (in percent by weight in each instance based on the composition of the contents):

up to 65% active substance (A)

30 to 70% liquified propellant and

up to 7% compressed propellant.

3. Use of a spray according to the preceding claims for the treatment of leather and textiles.